# EUROPÄISCHE PATENTANMELDUNG

(11) **EP 3 461 919 A1**
(43) Veröffentlichungstag der Anmeldung: **03.04.2019**
(21) Anmeldenummer: 17020554.6
(22) Anmeldetag: 30.11.2017
(51) Int. Cl.: C21B 5/06, C21B 13/00, C01B 3/36, C01B 3/38

(54) **VERFAHREN UND VORRICHTUNG ZUR REDUKTION VON METALLOXIDEN**

(30) Priorität: 28.09.2017 DE 102017009097
(71) Anmelder: Linde Aktiengesellschaft, 80331 München (DE)
(72) Erfinder: Schwarzhuber, Josef, 85283 Wolnzach (DE); Grob, Sascha, 70839 Gerlingen (DE); Heinzel, Albrecht, 81479 München (DE); Haselsteiner, Thomas, 85623 Dietramszell (DE); Pleintinger, Stefan, 80802 München (DE)
(74) Vertreter: Fischer, Werner

(57) **Zusammenfassung**

Die Erfindung betrifft ein Verfahren sowie eine Vorrichtung zur Gewinnung eines Metalls (12), bei dem ein Oxid (11) des Metalls in einer Reduktionszone (R) mit einem Reduktionsgas (10) in Kontakt gebracht wird, zu dessen Erzeugung ein kohlenwasserstoffhaltiger Einsatz (6) mit einem Oxidationsmittel (5) im Reaktionsraum (T) einer Vergasungseinrichtung (P) durch Partialoxidation bei einem Druck, der weniger als 2bar über dem Betriebsdruck in der Reduktionszone (R) liegt, zu einem Kohlenmonoxid und Wasserstoff enthaltenden Syntheserohgas (8) umgesetzt wird. Kennzeichnend hierbei ist, dass der kohlenwasserstoffhaltige Einsatz (6) und/oder das Oxidationsmittel (5) stromaufwärts der Vergasungseinrichtung (P) durch Zuführung von bei der Reduktion des Metalloxids abfallender Wärme vorgewärmt werden.

## Beschreibung

Die Erfindung betrifft ein Verfahren zur Gewinnung eines Metalls, bei dem ein Oxid des Metalls in einer Reduktionszone mit einem Reduktionsgas in Kontakt gebracht wird, zu dessen Erzeugung ein kohlenwasserstoffhaltiger Einsatz mit einem Oxidationsmittel im Reaktionsraum einer Vergasungseinrichtung durch Partialoxidation bei einem Druck, der weniger als 2bar über dem Betriebsdruck in der Reduktionszone liegt, zu einem Kohlenmonoxid und Wasserstoff enthaltenden Syntheserohgas umgesetzt wird.

Weiterhin betrifft die Erfindung eine Vorrichtung zur Durchführung des erfindungsgemäßen Verfahrens.

Unter einem Oxidationsmittel ist im Rahmen der vorliegenden Erfindung ein Gasgemisch zu verstehen, das ungebundenen Sauerstoff enthält. Insbesondere gelten technisch reiner Sauerstoff, Luft oder mit Sauerstoff angereicherte Luft als Oxidationsmittel.

Die Gewinnung von Metallen unter Einsatz eines durch Partialoxidation aus Kohlenwasserstoffen erzeugten Syntheserohgases als Reduktionsgas ist seit vielen Jahren Stand der Technik, wobei der Eisengewinnung durch Direktreduktion von Eisenerz die größte wirtschaftliche Bedeutung zukommt. Hierbei wird ein Reduktionsgas angestrebt, das neben einem für die Reduktion der Oxide geeigneten Druck und einer geeigneten Temperatur auch einen möglichst großen Anteil an den reduzierend wirkenden Stoffen Kohlenmonoxid und Wasserstoff aufweist. Um dies zu erreichen, werden grundsätzlich zwei Ansätze verfolgt.

Bei dem ersten Ansatz wird die Partialoxidation bei einem hohen, zwischen 40 und 60bar liegenden Druck durchgeführt, um ein Syntheserohgas mit einem hohen Gehalt an reduzierend wirkenden Stoffen zu erhalten. Allerdings ist es dadurch erforderlich, das Syntheserohgas zu entspannen, um es als Reduktionsgas in die Reduktionszone einleiten zu können, in der ein wesentlich niedrigerer Druck herrscht, der im Falle der Eisengewinnung typischerweise zwischen 5 und 15bar liegt. Da die energetisch ohnehin ungünstige und mit großem apparativem Aufwand verbundene Entspannung technisch sinnvoll nur bei moderaten Temperaturen von weniger als 300°C realisiert werden kann, die Betriebstemperatur der Reduktionszone aber bei ca. 800°C liegt, ist eine erneute Anwärmung des Gases nach der Entspannung erforderlich.

Der zweite Ansatz kommt ohne eine Entspannung des Syntheserohgases aus, weil die Partialoxidation bei einem Druck durchgeführt wird, der nur wenig über dem Betriebsdruck in der Reduktionszone liegt. Da jedoch die Ausbeute an Wasserstoff und Kohlenmonoxid mit dem Partialoxidationsdruck sinkt, weist das Syntheserohgas einen vergleichsweise geringen Gehalt an reduzierend wirkenden Stoffen auf, was eine Anreicherung dieser Stoffe bei der Erzeugung des Reduktionsgases erforderlich macht.

Den zweiten Ansatz verfolgt beispielsweise die Patentschrift US3907703, in der ein Verfahren sowie eine Vorrichtung der gattungsgemäßen Art offenbart werden. Sie schlägt vor, aus dem aufgrund seiner Zusammensetzung und Temperatur nicht direkt als Reduktionsgas einsetzbaren Syntheserohgas durch Zumischung eines kälteren und weniger Wasser sowie Staub aufweisenden Synthesegases ein verbessertes Gasgemisch zu erzeugen, von dem ein erster Teil gekühlt und gewaschen wird, um das kältere Synthesegas zu erhalten, und ein zweiter Teil als Reduktionsgas in die Reduktionszone eingeleitet wird. Der für die Behandlung des Syntheserohgases erforderliche Aufwand ist erheblich und wirkt sich negativ auf die Wirtschaftlichkeit der Metallerzeugung aus.

Aufgabe der vorliegenden Erfindung ist es, ein Verfahren der gattungsgemäßen Art sowie eine Vorrichtung zu dessen Durchführung anzugeben, durch die es möglich ist, die Nachteile des Standes der Technik zu überwinden.

Die gestellte Aufgabe wird verfahrensseitig erfindungsgemäß dadurch gelöst, dass der kohlenwasserstoffhaltige Einsatz und/oder das Oxidationsmittel stromaufwärts der Vergasungseinrichtung durch Zuführung von bei der Reduktion des Metalloxids abfallender Wärme vorgewärmt werden.

Bei der Partialoxidation werden die eingesetzten Kohlenwasserstoffe unter Sauerstoffmangel mit oder ohne katalytische Unterstützung umgesetzt, wobei Kohlenmonoxid und Wasserstoff durch partielle Oxidation und Reformierung entstehen. Die Höhe der Ausbeute an Wasserstoff und Kohlenmonoxid wird nicht zuletzt durch die Notwendigkeit bestimmt, einen Teil der Kohlenwasserstoffe zur Deckung des Wärmebedarfs unter Bildung von Wasser und Kohlendioxid vollständig zu verbrennen.

Durch die erfindungsgemäße Vorwärmung von einem oder mehreren Einsatzstoffen reicht es aus, zur Deckung des Wärmebedarfs der Partialoxidation einen im Vergleich zum Stand der Technik kleineren Teil der eingesetzten Kohlenwasserstoffe vollständig zu oxidieren, wodurch ein größerer Teil zu Wasserstoff und Kohlenmonoxid umgesetzt und ein Syntheserohgas mit einem erhöhten Anteil an reduzierend wirkenden Stoffen erhalten werden kann.

Vorzugsweise erfolgt die Vorwärmung so, dass ein vorgewärmter Einsatzstoff mit einer Temperatur von bis 650°C in die Vergasungseinrichtung eingeleitet werden kann. Hierzu wird der Einsatzstoff beispielsweise in indirektem Wärmetausch gegen heiß aus der Reduktionszone strömendes Abgas aufgeheizt.

Die Vorwärmung eines Einsatzstoffes kann ein- oder mehrstufig erfolgen. Wenn beispielsweise der kohlenwasserstoffhaltige Einsatz vor seiner Einleitung in die Vergasungseinrichtung adsorptiv entschwefelt wird, wofür seine Temperatur üblicherweise einen Wert von ca. 380°C nicht überschreiten darf, ist erfindungsgemäß vorgesehen, den kohlenwasserstoffhaltigen Einsatz in einem ersten Vorwärmschritt bis zur Entschwefelungstemperatur aufzuheizen und anschließend den entschwefelten kohlenwasserstoffhaltigen Einsatz in einem zweiten Schritt weiter vorzuwärmen.

Das Syntheserohgas verlässt die Vergasungseinrichtung typischerweise mit einer Temperatur zwischen 1000 und 1400°C, weshalb es u. U. nicht direkt, sondern erst nach einer Abkühlung als Reduktionsgas mit Temperatur in die Reduktionszone eingeleitet werden kann, die im Falle der Direktreduktion von Eisenerz zwischen 750 und 1000°C liegen. Bevorzugt wird das Syntheserohgas zur Abkühlung mit einem kühleren Gas, bei dem es sich etwa um Stickstoff oder Wasserdampf handelt, gemischt. Vorzugsweise wird als kühleres Gas aber ein Rückführstrom aus dem Reduktionsprozess eingesetzt, wie beispielsweise ein Wasserstoff und/oder Kohlenmonoxid enthaltendes Abgas aus der Reduktionszone, das gegen einen oder mehrere der Einsatzstoffe für die Partialoxidation und/oder bei einer Dampfproduktion abgekühlt und anschließend von Feststoffpartikeln gereinigt wird. Nicht für die Abkühlung des Synthesegases benötigtes Abgas kann exportiert und etwa in einem Kraftwerk zur Stromerzeugung verfeuert werden.

Wenn das kühlere Gas mit einem geringeren Druck vorliegt, als das abzukühlende Syntheserohgas, wie dies insbesondere der Fall ist, wenn als kühleres Gas ein Rückführstrom aus dem Reduktionsprozess eingesetzt wird, ist eine Verdichtung dieses Gases erforderlich. Diese Verdichtung kann mit einem mechanischen Verdichter durchgeführt werden. Vorzugsweise wird das kühlere Gas jedoch mit Hilfe eines Ejektors verdichtet, wobei das abzukühlende Syntheserohgas als Treibmedium dient.

Das erfindungsgemäße Verfahren ist besonders zum Einsatz bei der Direktreduktion von Eisenerz geeignet. Daneben soll seine Verwendung bei der Reduktion anderer Metalloxide jedoch nicht ausgeschlossen sein.

Das erfindungsgemäße Verfahren weiterbildend wird vorgeschlagen, zur Durchführung der Partialoxidation den kohlenwasserstoffhaltigen Einsatz zusammen mit dem Oxidationsmittel in den Reaktionsraum der Vergasungseinrichtung über einen Hauptbrenner einzubringen, der vorzugsweise einen bei Betriebsdruck der Vergasungseinrichtung betreibbaren Vorheizbrenner umfasst. Ein derartiger Hauptbrenner ist beispielsweise in der Patentanmeldung WO2016192833 offenbart, deren Inhalt mit ihrer Zitierung in die vorliegende Beschreibung aufgenommen wird. Haupt-und Vorheizbrenner können jedoch auch als getrennte Apparate ausgeführt sein.

Mit Hilfe des Vorheizbrenners wird der gewöhnlich von einer feuerfesten Keramik begrenzte Reaktionsraum der Vergasungseinrichtung langsam und kontrolliert vom kalten Zustand auf Betriebstemperatur gebracht. Außerdem kann bei einer Unterbrechung der Synthesegaserzeugung, wie sie etwa bei einer Störung der Metalloxidreduktion notwendig ist, die Vergasungseinrichtung über den integrierten Vorheizbrenner bei Betriebsdruck auf Betriebstemperatur gehalten werden. Dadurch ist es möglich, die Syntheserohgasproduktion jederzeit wesentlich schneller wieder aufzunehmen, als im Stand der Technik, bei dem es erforderlich ist, zunächst den Vorheizbrenner aus der drucklosen Vergasungseinrichtung auszubauen, die anschließend erst auf Betriebsdruck gebracht werden kann.

Vorzugsweise wir dem Vorheizbrenner bei seinem Betrieb ein Brenngas, das dem kohlenwasserstoffhaltigen Einsatz gleichen kann, sowie ein Oxidationsmittel mit Sauerstoffüberschuss zugeführt.

Weiterhin betrifft die Erfindung eine Vorrichtung zur Gewinnung eines Metalls, mit einer Vergasungs- und eine Reduktionseinrichtung, wobei die Reduktionseinrichtung eine Reduktionszone aufweist, in der ein Oxid des Metalls mit einem Reduktionsgas in Kontakt gebracht werden kann, zu dessen Erzeugung ein kohlenwasserstoffhaltiger Einsatz mit einem Oxidationsmittel in der Vergasungseinrichtung durch Partialoxidation bei einem Druck, der weniger als 2bar über dem Betriebsdruck in der Reduktionszone liegt, zu einem Kohlenmonoxid und Wasserstoff enthaltenden Syntheserohgas umsetzbar ist.

Die gestellte Aufgabe wird vorrichtungsseitig erfindungsgemäß dadurch gelöst, dass sie eine Vorwärmeinrichtung aufweist, in der der kohlenwasserstoffhaltige Einsatz und/oder das Oxidationsmittel stromaufwärts der Vergasungseinrichtung durch Zuführung von bei der Reduktion des Metalloxids abfallender Wärme vorgewärmt werden können.

Bevorzugt ist die Vorwärmeinrichtung strömungstechnisch mit der Reduktionseinrichtung verbunden, so dass ein dort heiß anfallendes Abgas in die Vorwärmeinrichtung geführt und in indirektem Wärmetausch mit einem vorzuwärmenden Einsatzstoff für die Vergasungseinrichtung abgekühlt werden kann.

Weiterhin bevorzugt umfasst die erfindungsgemäße Vorrichtung eine stromabwärts der Vergasungseinrichtung und stromaufwärts der Reduktionseinrichtung angeordnete Mischkammer, in der das Syntheserohgas mit einem kühleren Gas, bei dem es sich etwa um Stickstoff, Wasserdampf oder ein Rückführgas aus der Reduktionseinrichtung handelt, zum Reduktionsgas gemischt und abgekühlt werden kann. Zweckmäßigerweise ist die Mischeinrichtung mit der Vorwärmeinrichtung verbunden, so dass ihr als kühleres Gas ein dort gegen einen Einsatzstoff für die Vergasungseinrichtung abgekühltes Abgas aus der Reduktionseinrichtung zuführbar ist.

Die Mischkammer kann als eigenständiges Anlagenteil ausgeführt sein oder mit einem anderen Anlagenteil eine bauliche Einheit bilden. Beispielsweise kann die Mischeinrichtung von dem druckfesten Außenmantel der Vergasungseinrichtung umschlossen sein.

Zur Einleitung des kühleren Gases in die Mischkammer kann die erfindungsgemäße Vorrichtung einen Verdichter wie beispielsweise einen Kolben- oder Turboverdichter umfassen, mit dem der Druck des kühleren Gases auf den Druck in der Mischkammer angehoben werden kann. Bevorzugt ist jedoch die Mischkammer als Teil eines Ejektors ausgeführt, in dem das abzukühlende Syntheserohgas als Treibmedium einsetzbar ist, um das kühlere Gas anzusaugen.

Bei der Vergasungseirichtung handelt es sich vorzugsweise um einen Reaktor mit einem Reaktionsraum, der von einer feuerfesten Keramik begrenzt wird, und in dem eine Partialoxidation mit oder ohne katalytische Unterstützung durchführbar ist. Zweckmäßigerweise umfasst die Vergasungseinrichtung einen Hauptbrenner zur Einleitung der Einsatzstoffe sowie einen bei dem Betriebsdruck der Vergasungseinrichtung betreibbaren, mit einer elektrischen Zündvorrichtung sowie einer Flammenüberwachung ausgestatteten Vorheizbrenner. Der Vorheizbrenner ist entweder in den Hauptbrenner integriert oder als eigenständiger Apparat ausgeführt. Zur Vermeidung von Beschädigungen der empfindlichen elektrischen Teile, kann insbesondere die Elektrode der Zündvorrichtung im Normalbetrieb der Vergasungseinrichtung in einen nur mäßig thermisch belasteten Bereich bewegt werden. Dies wird z. B. über ein Stopfbuchsensystem erreicht, über das die Elektrode in die feuerfeste Begrenzung des Reaktionsraums zurückgezogen werden kann.

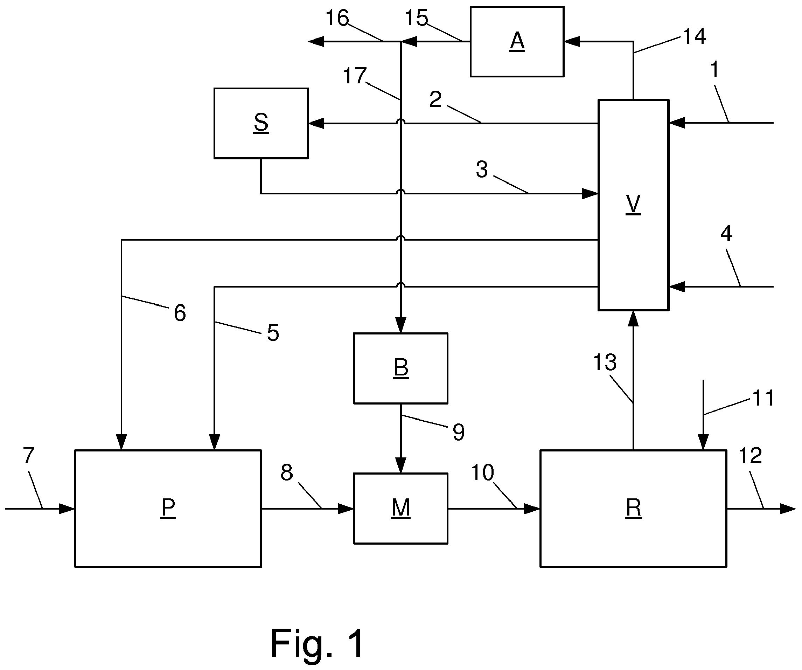

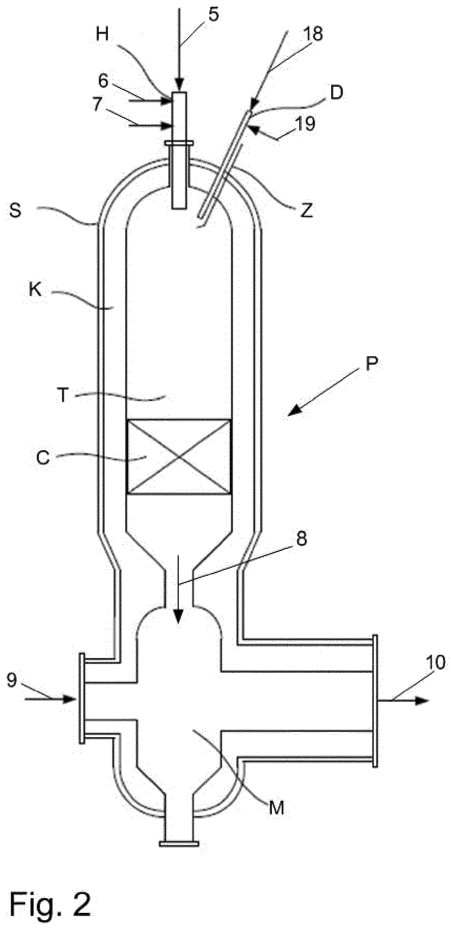

Im Folgenden soll die Erfindung anhand zweier in den Figuren 1 und 2 schematisch dargestellter Ausführungsbeispiele näher erläutert werden.

In der Figur 1 ist das Blockdiagramm einer besonders bevorzugten Ausgestaltung der Erfindung dargestellt, während die Figur 2 eine im Rahmen der Erfindung einsetzbare Vergasungseinrichtung im Längsschnitt zeigt.

In der Figur 1 wird ein kohlenwasserstoffhaltiger Einsatz 1 wie etwa Erdgas der Vorwärmeinrichtung V zugeführt, die er, auf eine erste bei ca. 380°C liegende Temperatur vorgewärmt, über Leitung 2 verlässt, um in die Schwefelabtrennung S eingeleitet zu werden. Hier wird enthaltener Schwefel entfernt, ehe der Einsatz über Leitung 3 in die Vorwärmeinrichtung V zurückgeführt und dort weiter auf eine Temperatur von bis zu 650°C aufgeheizt wird. Ebenfalls wird in der Vorwärmeinrichtung V ein Oxidationsmittel 4 vorgewärmt, das anschließend parallel zum vorgewärmten kohlenwasserstoffhaltigen Einsatz 6 über Leitung 5 in die Vergasungseinrichtung P eingeleitet wird. Gemeinsam mit Dampf 7 werden die eingesetzten Stoffe in der Vergasungseinrichtung P zu einem Wasserstoff und Kohlenmonoxid enthaltenden Syntheserohgas 8 umgesetzt, das mit einer Temperatur von mehr als 1000°C der Mischeinrichtung M zugeführt wird, um mit einem kälteren Gas 9 zum Reduktionsgas 10 gemischt und abgekühlt zu werden.

Das Reduktionsgas 10 wird in der Reduktionszone der Reduktionseinrichtung R mit Eisenerz 11 in Kontakt gebracht, das dabei zu Eisen 12 reduziert wird. Aus der Reduktionseinrichtung R kann ein Abgas 13 heiß abgezogen werden, das neben Wasser und Kohlendioxid auch Wasserstoff und Kohlenmonoxid enthält, die bei der Reduktion nicht umgesetzt wurden. Das heiße Abgas 13 wird in der Vorwärmeinrichtung V in indirektem Wärmetausch gegen den schwefelhaltigen 1 und den entschwefelten kohlenwasserstoffhaltigen Einsatz 3 sowie das Oxidationsmittel 4 abgekühlt und anschließend zur Entfernung von Feststoffen über Leitung 14 in die Partikelabtrennung A geführt. Ein erster Teil des abgekühlten und von Feststoffen gereinigten Abgases 15 wird über Leitung 16 etwa als Brennstoff für ein Kraftwerk exportiert, während ein zweiter Teil 17 über den Rückführverdichter B als kälteres Gas 9 in die Mischeinrichtung M geleitet wird.

Die in Figur 2 dargestellte Vergasungseinrichtung P weist einen druckfesten, mit einer feuerfesten Keramik K ausgekleideten Stahlmantel S auf. Die feuerfeste Keramik K umschließt den im Wesentlichen zylindrischen Reaktionsraum T, in dessen unterem Bereich ein Katalysatorbett C angeordnet ist. Am Kopf der Vergasungseinrichtung P befindet sich ein Hauptbrenner H, über den das vorgewärmte Oxidationsmittel 5, der ebenfalls vorgewärmte kohlenwasserstoffhaltige Einsatz 6 sowie Dampf 7 in den Reaktionsraum T eingebracht werden können. Neben dem Hauptbrenner H ist der mit einer elektronischen Zündvorrichtung sowie einer Flammenüberwachung ausgestattete Vorheizbrenner D angeordnet. Er dient zur Aufheizung der Vergasungseinrichtung P aus dem kalten Zustand und zur Aufrechterhaltung der Betriebstemperatur bei einem Anlagenstillstand, wobei er über Leitung 18 mit einem Oxidationsmittel und über Leitung 19 mit einem Brennstoff versorgt wird. Er ist bei Betriebsdruck betreibbar und muss während des Normalbetriebs der Vergasungseinrichtung P nicht ausgebaut werden. Um insbesondere die elektronische Zündeinrichtung unter den Bedingungen des Normalbetriebs vor Beschädigungen zu schützen, kann die Zündelektrode Z bis in die feuerfeste Keramik K zurückgezogen werden. Die Vergasungseinrichtung P bildet mit der Mischkammer M, in der das mit katalytischer Unterstützung erzeugte heiße Syntheserohgas 8 mit dem kühleren Gas 9 zum Reduktionsgas 10 gemischt wird, eine bauliche Einheit.

## Patentansprüche

1. Verfahren zur Gewinnung eines Metalls (12), bei dem ein Oxid (11) des Metalls in einer Reduktionszone (R) mit einem Reduktionsgas (10) in Kontakt gebracht wird, zu dessen Erzeugung ein kohlenwasserstoffhaltiger Einsatz (6) mit einem Oxidationsmittel (5) im Reaktionsraum (T) einer Vergasungseinrichtung (P) durch Partialoxidation bei einem Druck, der weniger als 2bar über dem Betriebsdruck in der Reduktionszone (R) liegt, zu einem Kohlenmonoxid und Wasserstoff enthaltenden Syntheserohgas (8) umgesetzt wird, **dadurch gekennzeichnet, dass** der kohlenwasserstoffhaltige Einsatz (6) und/oder das Oxidationsmittel (5) stromaufwärts der Vergasungseinrichtung (P) durch Zuführung von bei der Reduktion des Metalloxids abfallender Wärme vorgewärmt werden.

2. Verfahren nach Anspruch 1, **dadurch gekennzeichnet, dass** ein Einsatzsoff (5, 6) bis auf maximal 650°C vorgewärmt wird.

3. Verfahren nach einem der Ansprüche 1 oder 2, **dadurch gekennzeichnet, dass** Syntheserohgas (8) mit einem kühleren Gas (9) zum Reduktionsgas (10) gemischt wird.

4. Verfahren nach Anspruch 3, **dadurch gekennzeichnet, dass** als kühleres Gas (9) Stickstoff oder Wasserdampf oder ein von Feststoffpartikeln gereinigtes Abgas (13) aus der Reduktionszone (R) eingesetzt wird.

5. Verfahren nach einem der Ansprüche 3 oder 4, **dadurch gekennzeichnet, dass** das kühlere Gas (9) mit Hilfe eines Ejektors verdichtet wird.

6. Verfahren nach einem der Ansprüche 1 bis 5, **dadurch gekennzeichnet, dass** es bei der Direktreduktion von Eisenerz eingesetzt wird.

7. Vorrichtung zur Gewinnung eines Metalls (12), mit einer Vergasungs- (P) und einer Reduktionseinrichtung (R), wobei die Reduktionseinrichtung (R) eine Reduktionszone aufweist, in der ein Oxid (11) des Metalls (12) mit einem Reduktionsgas (10) in Kontakt gebracht werden kann, zu dessen Erzeugung ein kohlenwasserstoffhaltiger Einsatz (6) mit einem Oxidationsmittel (5) in der Vergasungseinrichtung (P) durch Partialoxidation bei einem Druck, der weniger als 2bar über dem Betriebsdruck in der Reduktionszone (R) liegt, zu einem Kohlenmonoxid und Wasserstoff enthaltenden Syntheserohgas (8) umsetzbar ist, **dadurch gekennzeichnet, dass** sie eine Vorwärmeinrichtung (V) aufweist, in der der kohlenwasserstoffhaltige Einsatz (6) und/oder das Oxidationsmittel (5) stromaufwärts der Vergasungseinrichtung (P) durch Zuführung von bei der Reduktion des Metalloxids abfallender Wärme vorgewärmt werden können.

8. Vorrichtung nach Anspruch 7, **dadurch gekennzeichnet, dass** die Vorwärmeinrichtung (V) strömungstechnisch so mit der Reduktionseinrichtung (R) verbunden ist, dass ein dort heiß anfallendes Abgas (13) in die Vorwärmeinrichtung (V) geführt und in indirektem Wärmetausch mit einem vorzuwärmenden Einsatzstoff (1, 4) für die Vergasungseinrichtung (P) abgekühlt werden kann.

9. Vorrichtung nach einem der Ansprüche 7 oder 8, **dadurch gekennzeichnet, dass** sie eine stromabwärts der Vergasungseinrichtung (P) und stromaufwärts der Reduktionseinrichtung (R) angeordnete Mischkammer (M) umfasst, in der Syntheserohgas (8) mit einem kühleren Gas (9) zum Reduktionsgas (10) gemischt und abgekühlt werden kann.

10. Vorrichtung nach Anspruch 9, **dadurch gekennzeichnet, dass** die Mischkammer (M) als eigenständiges Anlagenteil ausgeführt ist oder mit einem anderen Anlagenteil (P) eine bauliche Einheit bildet.

11. Vorrichtung nach einem der Ansprüche 9 oder 10, **dadurch gekennzeichnet, dass** die Mischkammer (M) als Teil eines Ejektors ausgeführt ist, in dem das abzukühlende Syntheserohgas (8) als Treibmedium einsetzbar ist, um das kühlere Gas (9) anzusaugen.

12. Vorrichtung nach einem der Ansprüche 7 bis 11, **dadurch gekennzeichnet, dass** die Vergasungseinrichtung (V) einen Hauptbrenner (H) zur Einleitung der Einsatzstoffe (5, 6) sowie einen bei dem Betriebsdruck der Vergasungseinrichtung (P) betreibbaren, mit einer elektrischen Zündvorrichtung und einer Flammenüberwachung ausgestatteten Vorheizbrenner (D) umfasst.
